# EUROPEAN PATENT APPLICATION

(11) **EP 3 184 809 A1**
(43) Date of publication of application: **28.06.2017**
(21) Application number: 14900246.1
(22) Date of filing: 22.08.2014
(51) Int. Cl.: F03C 1/253, F04B 1/22

(54) **HYDRAULIC PUMP/MOTOR WITH ROTATION DETECTION MECHANISM**

(71) Applicant: Komatsu Ltd., Minato-ku Tokyo 107-8414 (JP)
(72) Inventor: NABATA, Jun, Oyama-shi Tochigi 323-8558 (JP); OCHIAI, Takashi, Oyama-shi Tochigi 323-8558 (JP); HORI, Shuuji, Oyama-shi Tochigi 323-8558 (JP)
(74) Representative: Flügel Preissner Schober Seidel
(86) International application number: PCT/JP2014/072033
(87) International publication number: WO 2016/027376

(57) **Abstract**

An object of the present invention is to provide a hydraulic pump/motor with a rotation detection mechanism, capable of detecting a rotational direction and a rotation speed of a rotational shaft with a simple structure and easily performing machining of a detection target section. To achieve the object, the rotation detection mechanism includes a detection target section 52 including three or more recesses 6a to 6c (6) formed on an outer peripheral surface of a cylinder block 14, the three or more recesses 6 being formed in a unique arrangement pattern with different arc lengths R1 to R3 between the three continuous recesses with respect to a forward rotational direction F of a rotational shaft 13 and being formed so as not to include the unique arrangement pattern with respect to a reverse rotational direction B of the rotational shaft 13, and a rotation sensor 50 arranged in a casing in a state of facing the detection target section 52 and configured to detect the detection target section 52. Each of the three or more recesses 6 having a cross section having a same semicircular shape, perpendicular to a direction of the rotational shaft 13.

## Description

### Field

The present invention relates to a hydraulic pump/motor (hydraulic pump or hydraulic motor) with a rotation detection mechanism, capable of detecting a rotational direction and a rotation speed of a rotational shaft with a simple structure and performing machining on a detection target section easily.

### Background

In a conventional construction machine, or the like, a hydraulic pump driven by an engine and a hydraulic motor driven by oil are commonly used. For example, an axial-based swash plate type hydraulic pump/motor includes a rotational shaft rotatably attached inside a casing, a cylinder block that rotates with this rotational shaft, a plurality of pistons fittingly and reciprocatingly inserted into a plurality of cylinder bores formed on the cylinder block, a swash plate provided inside the casing so as to be tilted with respect to the rotational shaft and configured to support a distal end portion of the pistons in a manner to achieve sliding contact, and a valve plate configured to come in sliding contact with a rear end surface of the cylinder block, the hydraulic pump/motor being configured to circulate oil into a cylinder hole via a port provided on the valve plate.

In a case where the swash plate type hydraulic pump/motor is used as a hydraulic pump, the piston is reciprocated by rotating the cylinder block by rotationally driving the rotational shaft by an engine, or the like, whereby the oil sucked into the cylinder bore from a port on a low-pressure side is pressurized by the piston and discharged from a port on a high-pressure side.

In a case where the swash plate type hydraulic pump/motor is used as a hydraulic motor, the rotational shaft is rotated together with the cylinder block by supplying the oil from the port on the high-pressure side and pressing the swash plate with the piston protruding from the cylinder bore.

There is a known swash plate type hydraulic pump/motor that includes a rotation sensor configured to detect a rotation speed of the cylinder block. For example, according to Patent Literature 1, a detection target section is provided, on which a large number of irregular portions is formed evenly by gear machining on an outer peripheral surface of the cylinder block. An electromagnetic pickup type rotation sensor fixed to the casing outputs a detection signal in accordance with a periodical change of a distance (magnetic field) between the rotation sensor and the detection target section, to a controller. The controller shapes an AC waveform of the detection signal output from the rotation sensor and calculates its frequency as a rotation speed of the cylinder block.

### Citation List

### Patent Literature

Patent Literature 1: Japanese Patent Application Laid-open No. 2009-174505 A
Patent Literature 2: Japanese Patent Application Laid-open No. H2-116753 A
Patent Literature 3: Japanese Patent Application Laid-open No. HJP 6-101692 A

### Summary

### Technical Problem

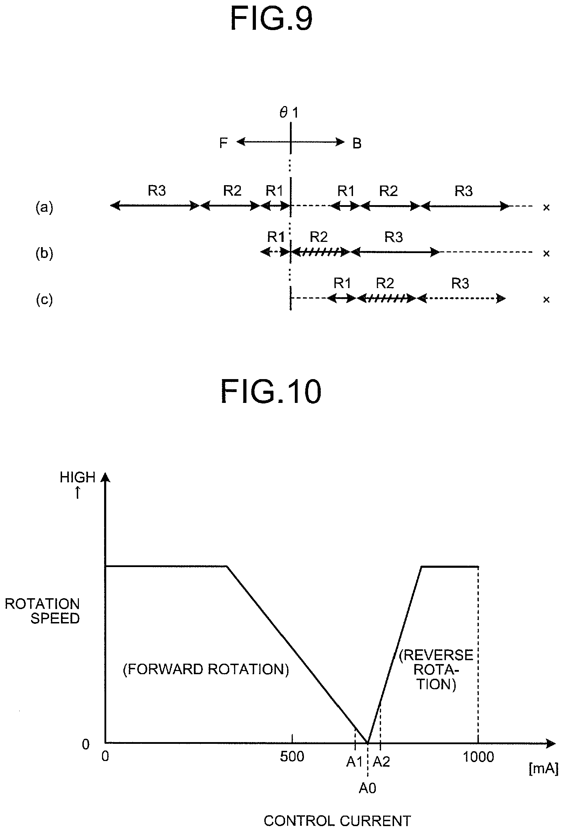

Meanwhile, there is a demand toward a hydraulic motor for driving a fan, or the like, for enhancing fuel efficiency of hydraulic drive by minimizing the rotation speed of the fan when cooling is unnecessary. Here, note that, with a directional control valve using an electromagnetic flow control (EPC) valve, rotation of the hydraulic motor is switched from forward rotation to reverse rotation as the control current for controlling the directional control valve increases, as illustrated in FIG. 9. Additionally, in FIG. 9, the rotation speed of the hydraulic motor is set to zero when the control current is A0. However, there is no current width (dead band) to set the rotation speed to zero. It would be sufficient to set the control current to A1 in a case where the rotation speed is controlled, in forward rotation, to a desired small value using such a directional control valve. However, since there is no dead band, it is difficult to control the rotation to be a forward rotation state in the vicinity of the control current. In this case, provided that whether the rotational direction of the hydraulic motor is forward or reverse can be detected, it would be possible to control the hydraulic motor, in the forward rotation, so as to have the desired low rotation speed using a result of detection.

Meanwhile, Patent Literature 2 describes a rotational direction detection apparatus configured to detect a rotational direction by providing a toothed portion asymmetrically shaped with respect to the rotational direction, at an outer periphery of a rotating magnetic body. Unfortunately, however, the apparatus described in Patent Literature 2 would need much time and labor for machining on the asymmetrically shaped toothed portion.

Another case of Patent Literature 3 describes an apparatus configured to unevenly arrange three detection bodies on a circumference of a rotating body and configured to judge the rotational direction of the rotating body on the basis of an interval of pulse signals at the time of detection of the three detection bodies. There is no description in Patent Literature 3, however, on how the detection bodies are formed on the circumference of the rotating body. As judged from diagrams, or the like, with Patent Literature 3, a cross section of a detecting unit has a rectangular shape, making it difficult to perform machining to form the detecting unit on the circumference of the rotating body.

The present invention has been made in view of the above-described issue, and an object thereof is to provide a hydraulic pump/motor with a rotation detection mechanism, capable of detecting a rotational direction and a rotation speed of a rotational shaft with a simple structure and performing machining on a detection target section easily.

### Solution to Problem

To solve the problem and achieve the object, a hydraulic pump/motor with a rotation detection mechanism according to the present invention includes: a rotational shaft rotatably attached inside a casing; a cylinder block configured to rotate together with the rotational shaft; a plurality of pistons fittingly and reciprocatingly inserted into a plurality of cylinder bores formed on the cylinder block; a swash plate provided inside the casing so as to be tilted with respect to the rotational shaft and configured to slide a distal end portion of the plurality of pistons in a manner to achieve sliding contact; a valve plate configured to come in sliding contact with a rear end surface of the cylinder block; and a rotation detection mechanism configured to obtain a rotational direction and a rotation speed of the rotational shaft, wherein the hydraulic pump/motor with a rotation detection mechanism is configured to rotate the rotational shaft by circulating oil into the cylinder bore via a port provided on the valve plate and to obtain the rotational direction and the rotation speed of the rotational shaft by the rotation detection mechanism, the rotation detection mechanism includes: a detection target section including three or more recesses formed on an outer peripheral surface of the cylinder block, the three or more recesses being formed in a unique arrangement pattern with different arc lengths between the three continuous recesses with respect to one rotational direction of the rotational shaft and being formed so as not to include the unique arrangement pattern with respect to the other rotational direction of the rotational shaft; and a rotation sensor arranged in the casing in a state of facing the detection target section and configured to detect the detection target section, and
each of the three or more recesses has a cross section having a same semicircular shape perpendicular to a direction of the rotational shaft.

Moreover, in the hydraulic pump/motor with a rotation detection mechanism according to the present invention, the unique arrangement pattern includes first, second, and third arc lengths with respect to the one rotational direction of the rotational shaft, and one of an arc length adjoining the first arc length with respect to the other rotational direction of the rotational shaft and an arc length adjoining the third arc length with respect to the one rotational direction of the rotational shaft differs from the second arc length.

Moreover, in the hydraulic pump/motor with a rotation detection mechanism according to the present invention, the three or more recesses are arranged such that a condition that the three or more recesses are arranged to be asymmetrical with respect to a line passing through both a shaft center of the rotational shaft and a middle point of a line connecting two adjacent recesses is satisfied for all of two adjacent recesses.

Moreover, in the hydraulic pump/motor with a rotation detection mechanism according to the present invention, each of the three or more recesses is formed at an angle position that divides an angle between cylinder center positions of the adjoining cylinder bores formed with respect to the shaft center of the rotational shaft, into two.

Moreover, in the hydraulic pump/motor with a rotation detection mechanism according to the present invention, further includes: a dummy hole for adjusting rotation balance is provided inside the cylinder block.

Moreover, in the hydraulic pump/motor with a rotation detection mechanism according to the present invention, the rotation sensor is provided at a position corresponding to a portion from a deepest portion of the cylinder bore to a rear end surface of the cylinder block, in a shaft direction of the cylinder block.

Moreover, in the hydraulic pump/motor with a rotation detection mechanism according to the present invention, the rotation sensor is arranged in a plane that includes both a line on a sliding surface of the swash plate orthogonal to the shaft center of the rotational shaft and the shaft center.

### Advantageous Effects of Invention

According to the present invention, there is provided a detection target section including three or more recesses formed on an outer peripheral surface of a cylinder block, the three or more recesses being formed in a unique arrangement pattern with different arc lengths between the three continuous recesses with respect to one rotational direction of a rotational shaft and being formed so as not to include the unique arrangement pattern with respect to the other rotational direction of the rotational shaft, and a rotation sensor is arranged in a casing in a state of facing the detection target section, detects the detection target section, determines a rotational direction of the rotational shaft in accordance with the presence or absence of the unique arrangement pattern, and obtains a rotation speed by the number of repetitions of the arrangement pattern for one rotation. Furthermore, each of the three or more recesses has a cross section having a same semicircular shape, perpendicular to the direction of the rotational shaft. This makes it possible in the present invention to detect the rotational direction and the rotation speed of the rotational shaft with a simple structure and to perform machining of the detection target section easily.

### Brief Description of Drawings

FIG. 1 is a cross sectional view illustrating a schematic configuration of a hydraulic motor with a rotation detection mechanism, as the present embodiment.
FIG. 2 is a cross sectional view of the hydraulic motor with a rotation detection mechanism in FIG. 1, taken along a line A-A.
FIG. 3 is a cross sectional view of the hydraulic motor with a rotation detection mechanism FIG. 1, taken along a line B-B.
FIG. 4 is a cross sectional view of a cylinder block and a rotational shaft in a case where three recesses are formed on the cylinder block of the hydraulic motor with a rotation detection mechanism in FIG. 1, taken along a line C-C.
FIG. 5 is a time chart of a detection signal output by a rotation sensor in a case where a detection target section of the cylinder block illustrated in FIG. 4 is used.
FIG. 6 is a cross sectional view of the cylinder block and the rotational shaft in a case where three recesses are formed on the cylinder block of the hydraulic motor with a rotation detection mechanism in FIG. 1, in a case a radius of curvature of each of the recess and a dummy hole is equal to the radius of curvature of both end portions in a circumference direction of the cylinder port, taken along a line C-C.
FIG. 7 is a cross sectional view of the cylinder block and the rotational shaft in a case where four recesses are formed on the cylinder block of the hydraulic motor with a rotation detection mechanism in FIG. 1, taken along a line C-C.
FIG. 8 is a time chart of a detection signal output by the rotation sensor in a case where the detection target section of the cylinder block illustrated in FIG. 7 is used.
FIG. 9 is a diagram illustrating an arc length forming condition.
FIG. 10 is a diagram illustrating a relationship among the control current for a directional control valve, the rotational direction, and the rotation speed, of a hydraulic motor.

### Description of Embodiments

Hereinafter, embodiments of a hydraulic pump/motor with a rotation detection mechanism according to the present invention will be described with reference to the attached drawings. Note that in the following embodiments, a case where the hydraulic pump/motor with a rotation detection mechanism according to the present invention is applied to a swash plate type hydraulic motor (hereinafter, referred to as a "hydraulic motor") will be described. Moreover, description will be made on the assumption that the hydraulic motor is a fan driving motor. Note that the fan is provided to promote heat exchange of a radiator by allowing a low-temperature air sucked with the rotation of the fan, to pass through the radiator.

### (Overall configuration of hydraulic motor)

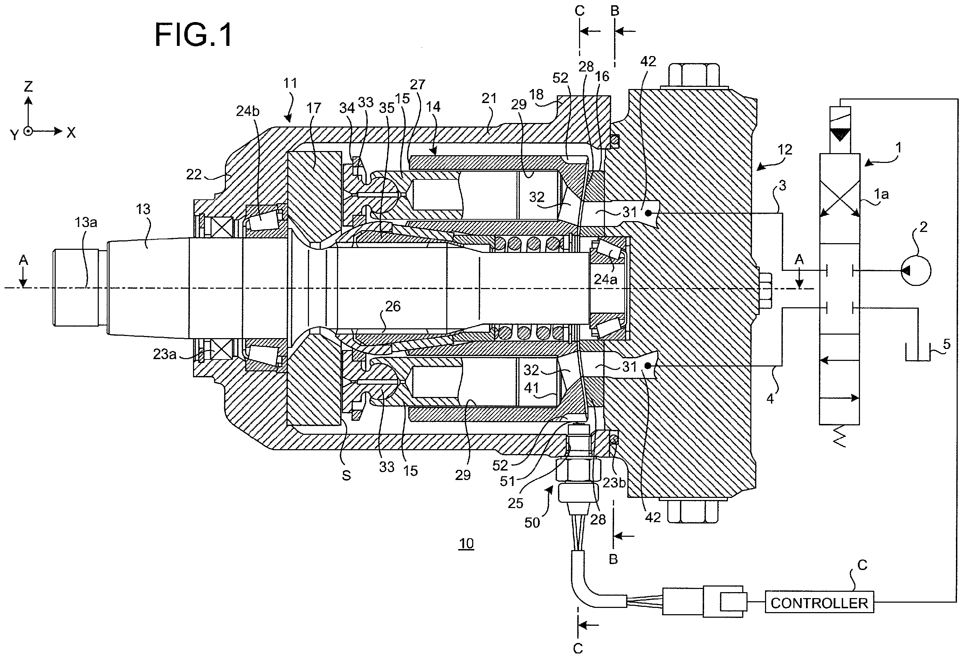

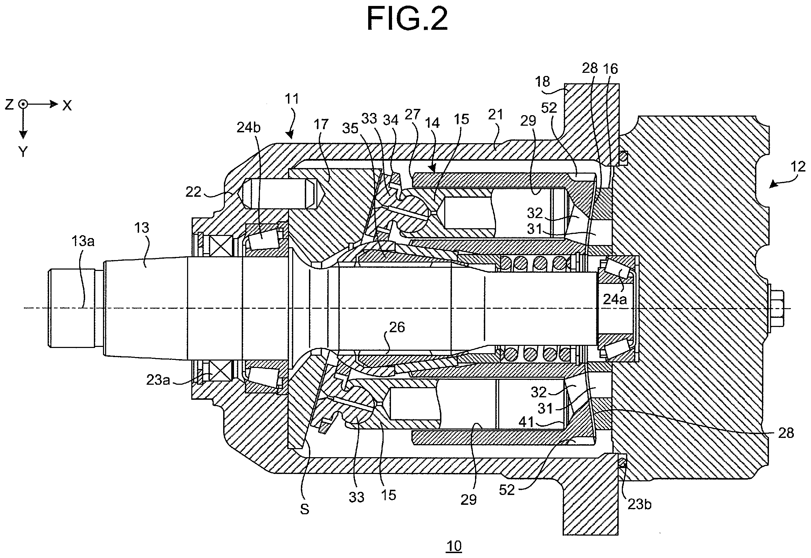

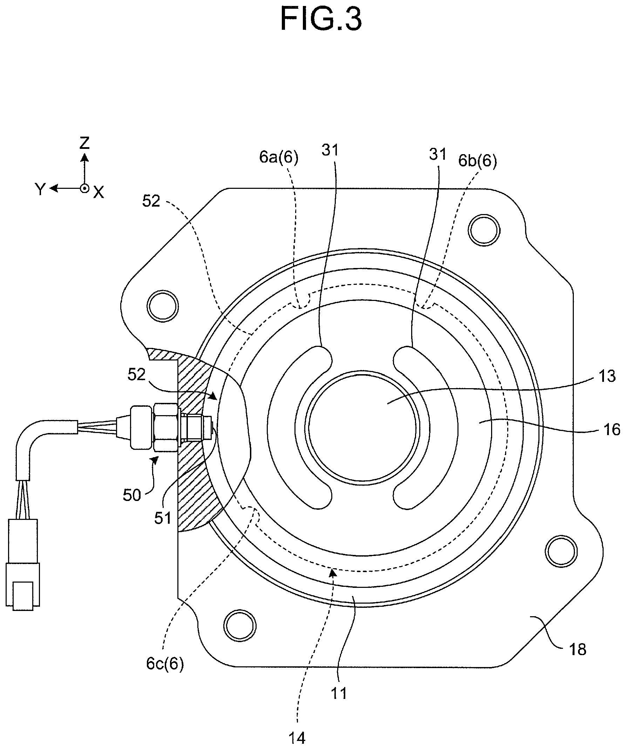

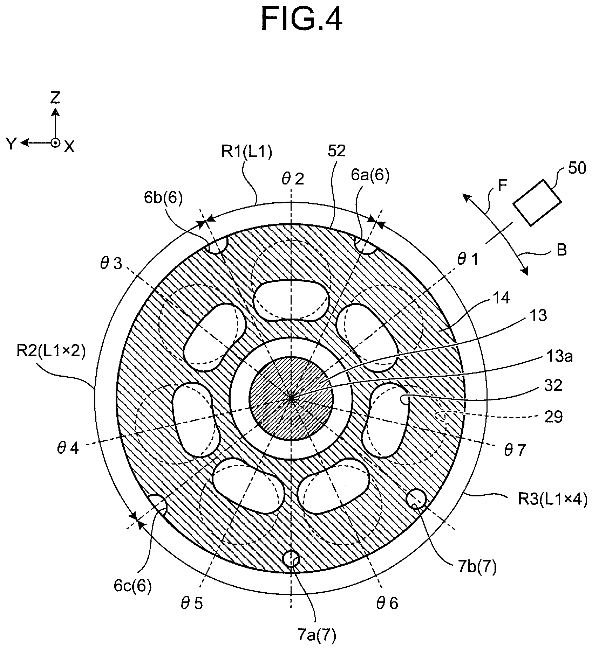

FIG. 1 is a cross sectional view (cross sectional diagram on an X-Z plane) illustrating a schematic configuration of a hydraulic motor 10. Moreover, FIG. 2 is a cross sectional view (cross sectional diagram on an X-Y plane) of the hydraulic motor 10 illustrated in FIG. 1, taken along a line A-A. Furthermore, FIG. 3 is a cross sectional view of the hydraulic motor 10 illustrated in FIG. 1, taken along a line B-B. Moreover, FIG. 4 is a cross sectional view of a cylinder block 24 and a rotational shaft 13 of the hydraulic motor 10 illustrated in FIG. 1, taken along a line C-C.

As illustrated in FIGS. 1 to 3, the hydraulic motor 10 includes a casing 11, an end cover 12, the rotational shaft 13, a cylinder block 14, a piston 15, a valve plate 16, and a swash plate 17.

The casing 11 contains, inside itself, the rotational shaft 13, the cylinder block 14, the valve plate 16, and the swash plate 17, forming a cylindrical shape including a cylindrical unit 21 having opening on one end, and an end wall unit 22. Hereinafter, the end wall unit 22 side of the casing 11 will be referred to as a "distal end side" and an opening side will be referred to as a "rear end side". As illustrated in FIGS. 1 to 3, the cylindrical unit 21 includes a flange shaped mounting unit 18 protruding in a radially outward direction from an end portion of the opening side. The mounting unit 18 includes a bolt hole (not illustrated) for mounting the hydraulic motor 10 onto a bracket of the fan (not illustrated).

The end cover 12 is a lid body for closing the opening on the rear end side of the casing 11. The end cover 12 incorporates a directional control valve 1, on which a spool 1a is switched, thereby switching the direction of supply/discharge of oil from a hydraulic pump 2. On the casing 11, an oil seal 23a is provided between the end wall unit 22 and the rotational shaft 13 of the cylindrical unit 21. Moreover, an oil seal 23b is provided between the casing 11 and the end cover 12. With the oil seal 23a and the oil seal 23b, oil is encapsulated into the casing 11.

The rotational shaft 13 is rotatably supported at the casing 11 and the end cover 12 via bearings 24a and 24b. Note that, in the following description, a side on which the rotational shaft 13 is supported by the bearing 24a will be referred to as a "proximal end side" and a side on which the rotational shaft 13 is supported by the bearing 24b will be referred to as a "distal end side". As illustrated in FIG. 1, the distal end of the rotational shaft 13 protrudes from the end wall unit 22 of the casing 11. A fan boss of the above-described fan is attached to a distal end of the rotational shaft 13.

The cylinder block 14 is connected with the rotational shaft 13 via a spline 26 and rotates integrally with the rotational shaft 13, inside the casing 11. The cylinder block 14 is arranged such that an end surface 27 on the distal end side (hereinafter, referred to as a "distal end surface 27") faces the swash plate 17, while an end surface 28 on the rear end side (hereinafter, referred to as a "rear end surface 28") comes in sliding contact with the surface of the valve plate 16, the cylinder block 14 being in rotatably contact with the valve plate 16. As illustrated in FIG. 1, more than one odd number of cylinder bores 29 are bored on the cylinder block 14 around a shaft of the cylinder block 14 as a center, with equal intervals in a circumference direction in parallel with the rotational shaft 13. In addition, a cylinder port 32 is formed at a proximal end portion of each of the cylinder bores 29 positioned on the rear end surface 28 side of the cylinder block 14. The cylinder port 32 communicates with the supply-discharge port 31 of the valve plate 16, to be described below.

The piston 15 is fittingly and reciprocatingly inserted into each of the cylinder bores 29. The piston 15 presses the swash plate with oil supply into the cylinder bore 29 and generates a rotational force onto the cylinder block 14 by using a rotational direction component force generated when the swash plate 17 is pressed. As illustrated in FIG. 1, the distal end portion of each of the pistons 15 has a structure in which a piston shoe 33 is attached to a recessed spherical portion. The piston shoe 33 slides in slidably contact with a sliding surface S of the swash plate 17, on a shoe retainer 34.

The valve plate 16 is formed in a disc shape, being fixed to the end cover 12 so as to be in sliding contact with the rear end surface 28 of the cylinder block 14. As illustrated in FIG. 3, the valve plate 16 has long-hole shaped supply-discharge ports 31 and 31 formed along the circumference direction. As illustrated in FIG. 1, each of the supply-discharge ports 31 penetrates through the valve plate 16 in a shaft direction, with the opening on the side abutting against the cylinder block 14 being communicable to the plurality of cylinder ports 32. Additionally, the opening on the side abutting against the end cover 12 of each of the supply-discharge ports 31 communicates with supply-discharge passages 42 and 42 formed inside the end cover 12. Note that each of the supply-discharge passages 42 and 42 formed on the end cover 12 is connected to the hydraulic pump 2 or an oil tank 5 via pipe lines 3 and 4 and via the directional control valve 1. Note that the directional control valve 1 can also perform flow rate control using an electromagnetic flow adjusting (EPC) valve. As a result, as illustrated in FIG. 10, a controller C can control rotational direction and rotation speed of the rotational shaft 13 by changing the control current toward the electromagnetic flow adjusting valve.

The swash plate 17 is provided between the end wall unit 22 and the cylinder block 14, in the casing 11, and includes a flat sliding surface S tilted by a predetermined angle within a surface parallel to the X-Y plane, as illustrated in FIG. 2. As described above, each of the piston shoes 33 slides in a circle while being pressed on the sliding surface S, along with the rotation of the cylinder block 14. As illustrated in FIG. 2, the present embodiment applies a fixed displacement type in which the swash plate 17 is fixed to the end wall unit 22. Note that it would be also possible to apply a variable displacement type equipped with a swash plate tilting apparatus configured to change the tilt angle of the swash plate 17. In the case of the variable displacement type, it is possible to change the capacity of the motor by changing a reciprocating distance of the piston 15 by changing the tilt angle of the sliding surface S.

As illustrated in FIG. 1, the above-configured hydraulic motor 10 operates such that the oil from the hydraulic pump 2 is supplied to the cylinder bore 29 via one supply-discharge passage 42 and one supply-discharge port 31, while the oil of the cylinder bore 29 is discharged to the supply-discharge passage 42 via the other supply-discharge port 31 and returned to the oil tank 5. The piston 15 inside the cylinder bore 29 to which the oil has been supplied presses the swash plate 17. Then, the rotational force is generated by the rotational direction component force generated in the piston 15. This rotational force is transmitted to the rotational shaft 13 via the cylinder block 14, so as to rotate the rotational shaft 13.

Next, a rotation sensor 50 provided on the above-described hydraulic motor 10 and a detection target section 52 detected by the rotation sensor 50 will be described in detail.

### (Rotation sensor)

As illustrated in FIG. 1, a through hole 25 penetrating in the radial direction is formed on the rear end side of the above-described casing 11, with the rotation sensor 50 being attached to the through hole 25. The present embodiment assumes that there is a surface including the mounting unit 18, perpendicular to the rotational shaft 13 in FIG. 1, with the rotation sensor 50 being installed so as to include a portion of the surface. The rotation sensor 50 is configured to detect the rotational direction and the rotation speed of the above-described cylinder block 14. The cylinder block 14 and the rotational shaft 13 rotate integrally with each other, and the rotational shaft 13 and a fan (not illustrated) attached to the rotational shaft rotate integrally with each other. Accordingly, the rotational direction and the rotation speed of the cylinder block 14 are equal to the rotational direction and the rotation speed of the rotational shaft 13, or of the fan.

The rotation sensor 50 includes a detecting unit 51 configured to detect the detection target section 52 provided on an outer peripheral surface of the cylinder block 14. The detecting unit 51 is fixed on the casing 11, in a state of facing the detection target section 52 with a predetermined interval between each other. A result of detection obtained by the detecting unit 51 is transmitted to the controller C (refer to FIG. 1). The controller C calculates the rotational direction and the rotation speed of the cylinder block 14 on the basis of the result of detection obtained by the detecting unit 51.

### (Arrangement position of rotation sensor)

Arrangement position of the above-described rotation sensor 50 will be described in more detail. As illustrated in FIG. 1, the present embodiment employs a configuration in which the detecting unit 51 of the rotation sensor 50 is arranged on a rear end side of the casing 11.

Herein, the "rear end side of casing" means a position facing the position between a deepest portion 41 of a portion where an inner diameter of the cylinder bore 29 is the piston diameter, and the rear end surface 28 of the cylinder block 14, in a shaft direction of the cylinder block 14. The reason why the rotation sensor 50 is arranged on the rear end side of the casing 11 will be described as follows. On the rotational shaft 13, the proximal end side and the distal end side are supported respectively by the bearings 24a and 24b. Accordingly, deviation of the rotational shaft 13 due to whirling rotation is maximized at a central portion between the proximal end side and the distal end side. Therefore, in a case where the detecting unit 51 is provided at the proximal end side of the rotational shaft 13, that is, at a position facing the position between the deepest portion 41 of the cylinder bore 29 and the rear end surface 28 of the cylinder block 14, in the shaft direction of the cylinder block 14, as illustrated in FIG. 1, effects of deviation of the rotational shaft 13 are not so significant compared with the case where the detecting unit 51 is provided on the more distal end side than the position illustrated in FIG. 1. This means that the distance between the detection target section 52 formed on the outer peripheral surface of the cylinder block 14 and the detecting unit 51 of the rotation sensor 50 can be maintained at a substantially constant level regardless of the whirling of the cylinder block 14.

Moreover, as described above, the hydraulic motor 10 rotates the cylinder block 14 by changing, with time, the position of the piston 15 that slides inside the cylinder bore 29 arranged on a same circumference. Therefore, whirling of the cylinder block 14 occurs in a maximum tilt angle direction of the swash plate 17, that is, within the X-Y plane illustrated in FIG. 2. Accordingly, the present embodiment arranges the detecting unit 51 of the rotation sensor 50 within the X-Z plane illustrated in FIG. 1.

Herein, the "X-Z plane" represents a plane including both a line on the sliding surface S of the swash plate 17, orthogonal to a shaft center 13a of the rotational shaft 13 and the shaft center 13a. That is, the "line on the sliding surface S of the swash plate 17, orthogonal to a shaft center 13a" is a line orthogonal to the line of the swash plate 17 in the maximum tilt angle direction. In other words, the "plane including both a line on the sliding surface S of the swash plate 17, orthogonal to the shaft center 13a, and the shaft center 13a", is a plane orthogonal to the plane (X-Y plane in FIG. 2) including both the line on the sliding surface S of the swash plate 17 in the tilt angle direction and the shaft center 13a.

In a case where the rotation sensor 50 is arranged within the X-Z plane orthogonal to the X-Y plane, it is possible to suppress the effects of vibration of the cylinder block 14 in the X-Y direction to the minimum level. Note that the "plane including both a line on the sliding surface of the swash plate, orthogonal to a shaft center of the rotational shaft, and the shaft center" includes a plane obtained by rotating the X-Z plane illustrated in FIG. 1 several times around the shaft center of the rotational shaft 13.

Note that in a case where the variable displacement type capable of changing the tilt angle of the swash plate 17 is applied, the above-described X-Z plane represents a plane that includes both a shaft center (not illustrated) of a swash plate rotational shaft that tilts the swash plate 17 and the shaft center 13a of the rotational shaft 13.

The rotation sensor 50 is implemented by employing, for example, an electromagnetic pickup type sensor using a magnetoresistive (MR) element and a Hall element.

### (Detection target section)

As illustrated in FIG. 3, the detection target section 52 includes three recesses 6a to 6c (6) on an outer peripheral surface of the cylinder block 14. The three recesses 6 are arranged so as to form a unique arrangement pattern in which the arc length between the three continuous recesses 6 differs with respect to one rotational direction of the rotational shaft 13, and so as not to form the unique arrangement pattern with respect to the other rotational direction of the rotational shaft 13. The detection target section 52 including the recesses 6 is formed at a position corresponding to the arrangement position of the rotation sensor 50, that is, on the rear end side of the cylinder block 14.

When the cylinder block 14 is rotated, the recesses 6 and a portion with no recesses 6 being formed, on the detection target section 52, pass through the position of the rotation sensor 50, thereby periodically changing the distance (magnetic field) between the detecting unit 51 and the detection target section 52. The detecting unit 51 of the rotation sensor 50 output the voltage generated by the change in the magnetic field as a detection signal and transmits the detection signal to the controller C. For each rotation of the cylinder block 14, the detection signal exhibits the unique arrangement pattern, for one rotational direction, and exhibits another unique arrangement pattern inverse to the unique arrangement pattern, for the other rotational direction. Accordingly, the controller C detects the rotational direction depending on whether the detected pattern has the unique arrangement pattern or the inverse unique arrangement pattern, and detects the rotation speed by the number of detection of the unique arrangement pattern or the inverse unique arrangement pattern.

### (Arrangement pattern of three recesses)

FIG. 4 is a diagram illustrating the cylinder block 14 and the rotational shaft 13, among the cross section, taken along a line C-C, of the hydraulic motor illustrated in FIG. 1. As illustrated in FIG. 4, the seven cylinder bores 29 are arranged within the cylinder block 14, with equal angles along a same circumference, in a region equally divided with seven angle positions θ1 to θ7. On the distal end side of the cylinder block 14, the cylinder port 32 is provided at a position shifted from the center of the cylinder bore 29 in the direction of the shaft center 13a, corresponding to each of the cylinder bores 29.

The recess 6a is provided at an angle position that divides a portion between the angle positions θ1 and θ2 into two. The recess 6b is provided at an angle position that divides a portion between the angle positions θ2 and θ3 into two. The recess 6c is provided at an angle position that divides a portion between the angle positions θ4 and θ5 into two. Each of the recesses 6a to 6c is formed by end mill machining, each having semicircular shaped cross section. As a result, this enables easy machining of each of the recesses 6a to 6c because a tool used for machining the cylinder block 14 can also be used as it is without any attachment work.

An arc length R1 between the recesses 6a and 6b is L1, an arc length R2 between the recesses 6b and 6c is L1 × 2, and an arc length R3 between the recesses 6c and 6a is L1 × 4. In short, each of the arc lengths R1 to R3 differs from each other. As a result, the arc length R2 is arranged to adjoin the arc length R1 as a reference, and the arc length R3 is further arranged to adjoin the arc length R2, with respect to the forward rotational direction F. The arc length R3 is arranged to adjoin the arc length R1 again. Moreover, with respect to the reverse rotational direction B, there is no formation of the pattern in which adjoining arc lengths sequentially form R1, R2, and R3.

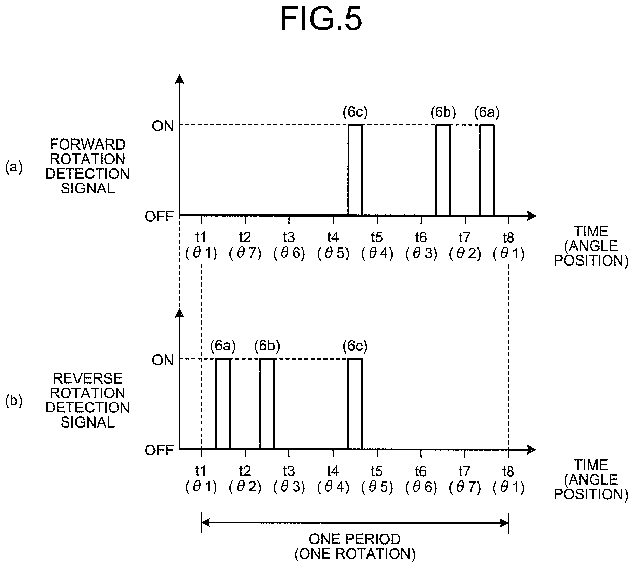

Herein, in a case where the rotation sensor 50 is provided at the angle position θ1 and the rotation of the cylinder block 14 is in the forward rotational direction F, the rotation sensor 50 sequentially detects the recesses 6 in the order of recesses 6c, 6b, and 6a, and generates a forward rotation detection signal, as illustrated in FIG. 5(a). In contrast, in a case where the rotation sensor 50 is provided at the angle position θ1 and the rotation of the cylinder block 14 is in the reverse rotational direction B, the rotation sensor 50 sequentially detects the recesses 6 in the order of recesses 6a, 6b, and 6c, and generates a reverse rotation detection signal, as illustrated in FIG. 5(b).

As illustrated in FIGS. 5(a) and 5(b), the signal pattern for one period (one rotation) when it is a forward rotation detection signal differs from a case where it is a reverse rotation detection signal, and the controller C can detect whether the cylinder block 14 is rotating in the forward rotational direction F or in the reverse rotational direction B on the basis of the difference in the signal pattern. In other words, when the controller C detects a signal pattern in which the arc lengths are in the order of R1, R2, and R3, the controller C determines the rotational direction of the cylinder block 14 as the reverse rotational direction B, and when the controller C does not detect the signal pattern in which the arc lengths are in the order of R1, R2, and R3, the controller C determines the rotational direction of the cylinder block 14 as the forward rotational direction F. Moreover, the controller C detects the number of repetition of the signal pattern of the forward rotation detection signal, or the signal pattern of the reverse rotation detection signal, as the rotation speed of the cylinder block 14.

### (Dummy hole for adjusting rotation balance)

Meanwhile, in FIG. 4, dummy holes 7a and 7b (7) for adjusting rotation balance of the cylinder block 14 are provided at each of the positions between the angle positions θ5 and θ6, and between the angle positions θ6 and θ7. These holes are provided because the recesses 6 formed by cutting the cylinder block 14 are arranged with irregular pitches along the outer peripheral surface, and this causes rotation balancing failure in relation to the rotational position of the cylinder block 14, leading to generation of whirling on the cylinder block 14. Note that the position, diameter, the number, or the like, of each of the dummy hole 7, are determined by the arrangement positions of the recesses 6. The dummy holes 7 are provided such that the centroid of the cylinder block 14 comes close to the shaft center 13a of the rotational shaft 13.

### (Diameter of recesses and dummy holes)

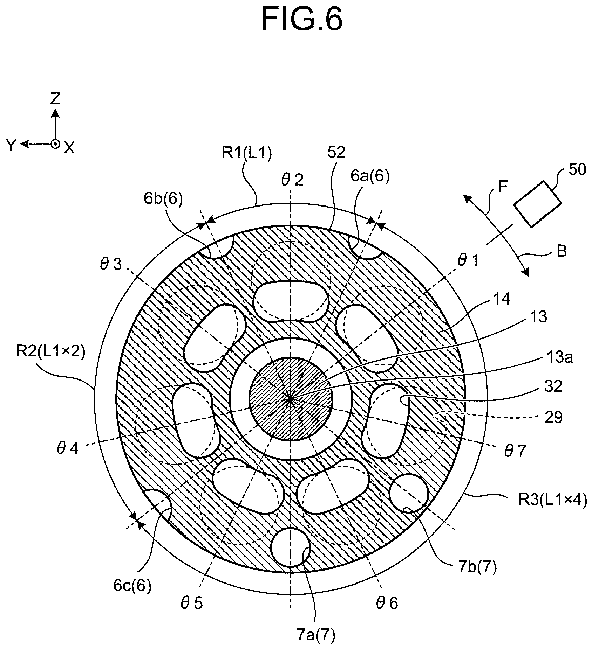

As illustrated in FIG. 6, it would be preferable to configure such that the radius of curvature of the recess 6 and the dummy hole 7 are the same radius of curvature as that of both end portions of a cylinder port 32 in the circumference direction. With this configuration, it is possible to continue to use an end mill used for machining the cylinder port 32, without replacement, at the time of machining of the recesses 6 and the dummy holes 7.

### (Arrangement pattern of four or more recesses)

Note that the number of recesses 6 is not limited to three, but may be four or more. In this case, the recesses 6 are arranged so as to form at least three adjoining different arc lengths R1 to R3 with respect to the forward rotational direction F and so as not to form at least three adjoining different arc lengths R1 to R3 with respect to the reverse rotational direction B. That is, each of the recesses 6 is arranged such that three or more recesses 6 are formed on the outer peripheral surface of the cylinder block 14 and that the three or more recesses 6 form the unique arrangement pattern with different arc lengths R1 to R3 between three continuous recesses 6 with respect to the forward rotational direction F of the cylinder block 14, and that the three or more recesses 6 do not include the unique arrangement pattern, with respect to the reverse rotational direction B of the cylinder block 14.

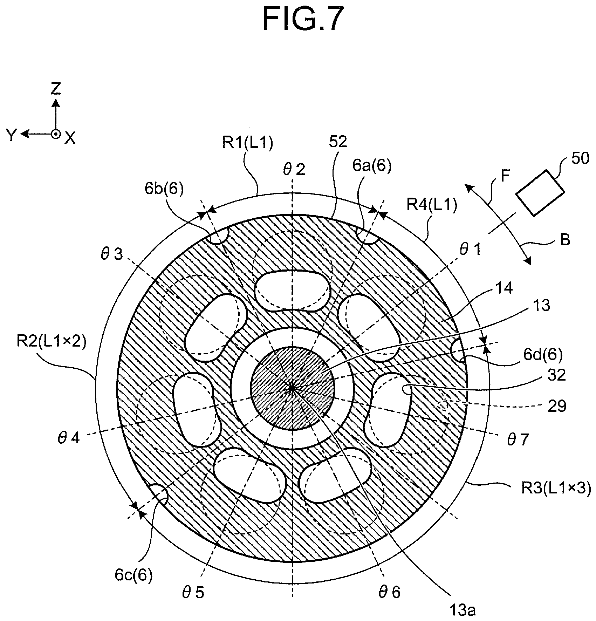

For example, as illustrated in FIG. 7, another recess 6d is provided between the angle positions θ1 and θ7, in addition to the recesses 6a to 6c illustrated in FIG. 4. With this configuration, the arc length R1 between the recesses 6a and 6b is L1, the arc length R2 between the recesses 6b and 6c is L1 × 2, the arc length R3 between the recesses 6c and 6a is L1 × 3, and an arc length R4 between the recesses 6d and 6a would be L1. This exemplary case includes a unique arrangement pattern in which the arc lengths are in the order of L1, L1 × 2, and L1 × 3 with respect to the forward rotational direction F, but does not include the pattern in which the arc lengths are in the order of L1, L1 × 2, and L1 × 3 with respect to the reverse rotational direction B.

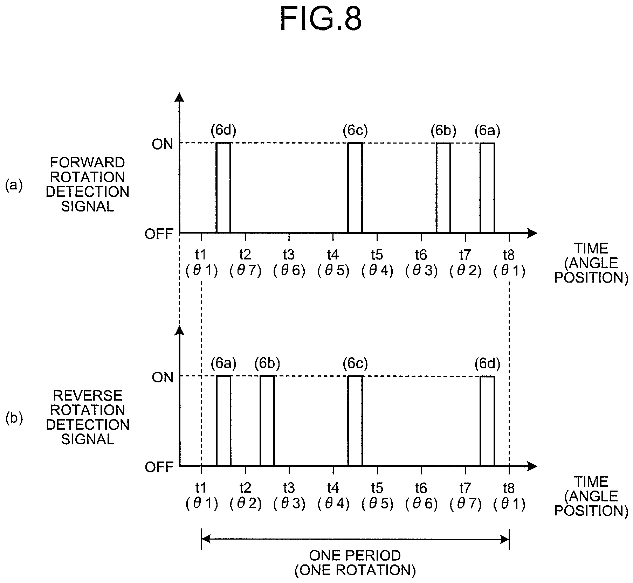

As illustrated in FIGS. 8(a) and 8(b), the signal pattern for one period (one rotation) when it is a forward rotation detection signal differs from a case where it is a reverse rotation detection signal, and the controller C detects whether the cylinder block 14 is rotating in the forward rotational direction F or in the reverse rotational direction B on the basis of the difference in the signal pattern. Moreover, the controller C detects the number of repetition of the signal pattern of the forward rotation detection signal, or the signal pattern of the reverse rotation detection signal, as the rotation speed of the cylinder block 14.

Each of the above-described recess 6 is provided at an intermediate position between the cylinder bores 29 adjacent in the circumference direction. Alternatively, it is also allowable to provide two or more recesses 6 at this intermediate position when the detection resolution of the rotation sensor 50 is high. Moreover, it is allowable to provide the recesses 6 on an outer peripheral surface in the vicinity of the angle position passing through the center of the cylinder bore 29.

In this case, it is possible to form a large number of recesses 6. Arrangement of the recesses 6 on the outer periphery will be described with reference to FIG. 9. Note that, as described above, it is sufficient to arrange the recesses 6 such that at least three different arc lengths R1 to R3 are continuously arranged on any one direction of the forward rotational direction F and the reverse rotational direction B.

As illustrated in FIG. 9(a), in a case where the arc lengths R1, R2, and R3 are sequentially formed with the angle position θ1 as a reference in the forward rotational direction F, the recesses 6 are arranged so as not to form the pattern in which the arc lengths R1, R2, and R3 are sequentially formed in the reverse rotational direction B. In this case, as illustrated in FIG. 9(b), the arc length R1 in the forward rotational direction F is included in the arc length R1 in the reverse rotational direction B. Moreover, as illustrated in FIG. 9(c), the arc length R3 in the forward rotational direction F is included in the arc length R3 in the reverse rotational direction B. From FIGS. 9(b) and 9(c), the condition would be that the arc length adjoining in the reverse rotational direction B with respect to the arc length R1 in the forward rotational direction F is not R2 and that the arc length adjoining in the forward rotational direction F with respect to the arc length R3 in the forward rotational direction F is not R2, either. Note that, as illustrated in FIGS. 4 and 7, the arc length adjoining in the reverse rotational direction B with respect to the arc length R1 in the forward rotational direction F is not R2, and the arc length adjoining in the forward rotational direction F with respect to the arc length R3 in the forward rotational direction F is not R2, either.

Moreover, in a case where arrangement patterns of three or more recesses 6 are examined from another view point, it would be sufficient that the three or more recesses 6 are arranged such that a condition that the three or more recesses 6 are arranged to be asymmetrical with respect to a line passing through both the shaft center 13a and a middle point of a line connecting two adjacent recesses 6 is satisfied for all of two adjacent recesses 6.

Note that the above-described embodiment assumes providing three or more recesses 6 on the outer peripheral surface of the cylinder block 14. Alternatively, it is also allowable to provide three or more protrusions instead of the recesses 6, and to determine the arc length between the protrusions to be R1 to R3, which correspond to the arc lengths between the recesses 6.

### (Arrangement position of detection target section in rotational shaft direction)

Corresponding to the configuration in which the detecting unit 51 of the rotation sensor 50 is arranged on the rear end side of the casing, the detection target section 52 is formed between the deepest portion 41 of a portion where the inner diameter of the cylinder bore 29 is the piston diameter, and the rear end surface 28 of the cylinder block 14, in the shaft direction of the cylinder block 14. As illustrated in FIG. 1, the dimension of the cylinder port 32 in the Z-direction is smaller than the diameter dimension of the cylinder bore 29. Accordingly, an outer peripheral site of a forming position of the cylinder port 32 is thicker than the outer peripheral site of a forming position of the cylinder bore 29. As described above, it is possible to easily form the recess 6 of the detection target section 52, by using this thick portion. Moreover, machining of the recess 6 can be easily performed with end mill machining similar to hole machining for other locations.

In the above-described embodiment, the three or more recesses 6 are formed on the outer peripheral surface of the cylinder block 14, the three or more recesses 6 are formed so as to have the unique arrangement pattern with different arc lengths R1 to R3 between three continuous recesses 6 with respect to one rotational direction (forward rotational direction F) of the cylinder block 14, and at the same time, formed so as not to have the unique arrangement pattern, with respect to the other rotational direction (the reverse rotational direction B) of the cylinder block 14. Then, it is possible determine the rotational direction of the cylinder block 14 in accordance with the presence/absence of detection of the unique arrangement pattern.

That is, in the present embodiment, it is possible to determine not only the rotation speed but also the rotational direction, of the rotational shaft 13. As a result, the controller C can control the rotational direction and the rotation speed of the hydraulic motor 10 by adjusting the control current toward the directional control valve 1 using the electromagnetic flow adjusting (EPC) valve on the basis of the relationship of the rotational direction/rotation speed of the hydraulic motor 10, with respect to the control current, illustrated in FIG. 10. For example, when it is desirable to control the rotation speed in the forward rotation to extremely low, it is sufficient to set the control current to A1, as illustrated in FIG. 10. In this, since the controller C does this control while detecting the current rotational direction and the rotation speed of the hydraulic motor 10, it is possible to perform control with high accuracy.

Moreover, each of the three or more recesses 6 has a cross section having a same semicircular shape, making it possible to form the recesses with end mill machining easily.

Moreover, since the dummy hole 7 for adjusting rotation balance is provided inside the cylinder block 14, it is possible to suppress whirling of the cylinder block 14 even when the recesses 6 are formed with irregular pitches on the outer peripheral surface of the cylinder block 14. As a result, it is possible to detect the rotational direction and the rotation speed of the cylinder block 14 with high accuracy.

### Reference Signs List

- 1: directional control valve
- 1a: spool
- 2: hydraulic pump
- 3, 4: pipe line
- 5: oil tank
- 6, 6a to 6d: recess
- 7, 7a, 7b: hole
- 10: hydraulic motor
- 11: casing
- 12: end cover
- 13: rotational shaft
- 13a: shaft center
- 14: cylinder block
- 15: piston
- 16: valve plate
- 17: swash plate
- 18: mounting unit
- 21: cylindrical unit
- 22: end wall unit
- 23a, 23b: oil seal
- 24: cylinder block
- 24a, 24b: bearing
- 25: through hole
- 26: spline
- 27: distal end surface
- 28: rear end surface
- 29: cylinder bore
- 31: supply-discharge port
- 32: cylinder port
- 33: piston shoe
- 34: shoe retainer
- 41: deepest portion
- 42: supply-discharge passage
- 50: rotation sensor
- 51: detecting unit
- 52: detection target section
- B: reverse rotational direction
- C: controller
- F: forward rotational direction
- R1, R2, R3: arc length
- S: sliding surface
- θ1 to θ7: angle position

## Claims

1. A hydraulic pump/motor with a rotation detection mechanism, comprising:
a rotational shaft rotatably attached inside a casing;
a cylinder block configured to rotate together with the rotational shaft;
a plurality of pistons fittingly and reciprocatingly inserted into a plurality of cylinder bores formed on the cylinder block;
a swash plate provided inside the casing so as to be tilted with respect to the rotational shaft and configured to slide a distal end portion of the plurality of pistons in a manner to achieve sliding contact;
a valve plate configured to come in sliding contact with a rear end surface of the cylinder block; and
a rotation detection mechanism configured to obtain a rotational direction and a rotation speed of the rotational shaft, wherein
the hydraulic pump/motor with a rotation detection mechanism is configured to rotate the rotational shaft by circulating oil into the cylinder bore via a port provided on the valve plate and to obtain the rotational direction and the rotation speed of the rotational shaft by the rotation detection mechanism,
the rotation detection mechanism includes:
a detection target section including three or more recesses formed on an outer peripheral surface of the cylinder block, the three or more recesses being formed in a unique arrangement pattern with different arc lengths between the three continuous recesses with respect to one rotational direction of the rotational shaft and being formed so as not to include the unique arrangement pattern with respect to the other rotational direction of the rotational shaft; and
a rotation sensor arranged in the casing in a state of facing the detection target section and configured to detect the detection target section, and
each of the three or more recesses having a cross section having a same semicircular shape perpendicular to a direction of the rotational shaft.

2. The hydraulic pump/motor with a rotation detection mechanism, according to claim 1, wherein the unique arrangement pattern includes first, second, and third arc lengths with respect to the one rotational direction of the rotational shaft, and one of an arc length adjoining the first arc length with respect to the other rotational direction of the rotational shaft and an arc length adjoining the third arc length with respect to the one rotational direction of the rotational shaft differs from the second arc length.

3. The hydraulic pump/motor with a rotation detection mechanism, according to claim 1 or 2, wherein the three or more recesses are arranged such that a condition that the three or more recesses are arranged to be asymmetrical with respect to a line passing through both a shaft center of the rotational shaft and a middle point of a line connecting two adjacent recesses is satisfied for all of two adjacent recesses.

4. The hydraulic pump/motor with a rotation detection mechanism, according to any one of claims 1 to 3, wherein each of the three or more recesses is formed at an angle position that divides an angle between cylinder center positions of the adjoining cylinder bores formed with respect to the shaft center of the rotational shaft, into two.

5. The hydraulic pump/motor with a rotation detection mechanism, according to any one of claims 1 to 4, wherein a dummy hole for adjusting rotation balance is provided inside the cylinder block.

6. The hydraulic pump/motor with a rotation detection mechanism, according to any one of claims 1 to 5, wherein the rotation sensor is provided at a position corresponding to a portion from a deepest portion of the cylinder bore to a rear end surface of the cylinder block, in a shaft direction of the cylinder block.

7. The hydraulic pump/motor with a rotation detection mechanism, according to any one of claims 1 to 6, wherein the rotation sensor is arranged in a plane that includes both a line on a sliding surface of the swash plate orthogonal to the shaft center of the rotational shaft and the shaft center.
